# EUROPÄISCHE PATENTSCHRIFT

(11) **EP 1 083 037 B1**
(45) Veröffentlichungstag und Bekanntmachung des Hinweises auf die Patenterteilung: **14.04.2004**
(21) Anmeldenummer: 00117120.6
(22) Anmeldetag: 10.08.2000
(51) Int. Cl.: B29C 47/08, B29C 47/10, B29C 47/92, B05C 17/005

(54) **Extruderschweisseinrichtung**
Extrusion welding apparatus
Appareil de soudage par extrusion

(30) Priorität: 08.09.1999 DE 29915768 U
(43) Veröffentlichungstag der Anmeldung: 14.03.2001
(73) Patentinhaber: WEGENER GmbH, D-52074 Aachen (DE)
(72) Erfinder: Gehde, Michael, Dr., 52076 Aachen (DE)
(74) Vertreter: Paul, Dieter-Alfred, Dipl.-Ing.

(56) Entgegenhaltungen:
- EP-A- 0 038 644
- AU-A- 655 737
- FR-A- 2 210 488
- NL-C- 1 010 957
- US-A- 3 953 006
- US-A- 4 210 796
- US-A- 4 804 110
- US-A- 5 005 731

## Beschreibung

Die Erfindung betrifft eine Extruderschweißeinrichtung zur Verschweißung von Kunststoffwerkstücken mit einem Extrudergerät, das mit einer Ausstoßeinrichtung für plastifiziertes Kunststoffmaterial ausgerüstet ist, wobei die Ausschußeinrichtung einen auf das Kunststoffmaterial einwirkenden Ausstoßorgan aufweist, der von einem Motor angetrieben ist.

Solche Extruderschweißeinrichtung sind in vielfältigen Ausführungsformen bekannt (vgl. z. B. DE 32 21 492 C1, DE 42 36 281 C2, EP 0 663 277 A1, DE 38 08 723 C1, DE 38 35 250 C1, DE 36 16 296 A1, DE-OS 28 23 171, EP 0 6377 497 A1, DE-GM 86 12 130.8, DE 297 18 972.7, DE 298 18 696.9, DE 298 18 757.4). Sie werden zum Verschweißen von Kunststoffplatten oder anderen Kunststoffwerkstücken verwendet.

Die bekannten Extruderschweißeinrichtungen bestehen aus einem Extrudergerät mit einem Antrieb in Form oder ähnlich einer Handbohrmaschine, der mit einem darauf abnehmbar aufgesetzten Vorsatzgerät versehen ist. Im wesentlichen in Längsrichtung durch dieses vorsatzgerät geht ein

Durchgangskanal, der einen Förderabschnitt mit einer Fördereinrichtung und einem Plastifizierabschnitt mit einer Heizeinrichtung und einer darin integrierten Ausstoßeinrichtung aufweist. Die Fördereinrichtung ist nahe dem Antrieb angeordnet, während sich der Plastifizierabschnitt am freien Ende des Extrudergeräts hin anschließt. Die Fördereinrichtung weist eine sich axial erstreckende Förderschraube auf, die von dem Antrieb in Drehbewegung versetzbar ist. Der Förderabschnitt des Durchgangskanals verläuft parallel zur Achse dieser Förderschraube und ist an den Durchmesser eines Drahts aus thermoplastischem Kunststoffmaterial derart angepaßt, daß der Draht beim Einführen über eine Einführöffnung von der Schraubverzahnung der Förderschraube erfaßt und in axialer Richtung parallel zu deren Achse eingezogen und transportiert wird. Über den Umfang der Förderschraube können auch mehrere Förderabschnitte vorgesehen sein, um den Einzug von Drähten verschiedener Durchmesser oder den gleichzeitigen Einzug von mehreren Drähten zu ermöglichen.

Der Plastifizierabschnitt des Durchgangskanals ist von einer elektrischen Heizeinrichtung umgeben. Diese sorgt dafür, daß das Kunststoffmaterial des Drahts plastifiziert, d. h. geschmolzen wird, so daß das Kunststoffmaterial über einen Schweißschuh in plastifiziertem Zustand austritt. Zuvor wird der Draht in einer zwischen Plastifizierabschnitt und Förderabschnitt angeordneten zerkleinerungseinrichtung zerstückelt, so daß er in granulatartiger Form in den Plastifizierabschnitt eintritt. Auf eine solche Zerkleinerungseinrichtung kann verzichtet werden, wenn das Kunststoffmaterial von vornherein in granuliertem Zustand zugeführt wird.

Damit das plastifizierte Kunststoffmaterial aus dem Schweißschuh austritt, enthält das Extrudiergerät eine Ausstoßeinrichtung mit einem auf das Kunststoffmaterial einwirkenden Ausstoßorgan. Bei den meisten Ausführungsformen solcher Extrudiergeräte ist das Ausstoßorgan als eine in dem Durchgangskanal des Plastifizierabschnitts angeordnete Förderschnecke ausgebildet, die mit der Fördereinrichtung für den Kunststoffdraht drehfest verbunden ist und demgemäß auch mit dem Antrieb gekoppelt ist. Im Betrieb wird die Förderschnecke in Drehbewegung gesetzt und sorgt so für den Ausstoß des plastifizierten Kunststoffmaterials.

Bei einer anderen Ausführungsform (vgl. DE 298 18 757.4) wird auf eine Förderschnecke verzichtet. Das plastifizierte Kunststoffmaterial wird in diesem Fall durch den nachrückenden Kunststoffdraht in Richtung Schweißschuh befördert und dort ausgestoßen. In diesem Fall bildet die Förderschraube, die den Kunststoffdraht einzieht und in Richtung Plastifizierabschnitt transportiert, das Ausstoßorgan.

Bei den bekannten Extrudergeräten ist man bei der konstruktiven Ausbildung von Handbohrmaschinen ausgegangen, die dann durch einen Extrudiervorsatz modifiziert und ergänzt worden sind. Als Antrieb sind deshalb bisher nur Elektromotoren zum Einsatz gekommen. Solche Elektromotoren haben ein schlechtes Leistungsgewicht und sind voluminös. Beides behindert die Handhabung des Extrudergeräts und ist auch von Nachteil, wenn es beispielsweise an Halbautomaten oder Robotern angebaut werden soll.

Daneben sind Geräte zum Ausbringen von elastomeren Materialien bekannt, bei dem ein elastomeres Material - auch in Form eines Bandes oder Drahtes - zusammen mit einem Härter in eine Mischkammer eingeführt wird, die von einer Förderschnecke durchsetzt ist (vgl. FR-A-2 210 488; US-A-3 953 006, US-A-5 005 731). Nach der Vermischung wird das elastomere Material ausgestoßen und härtet dann nach dem Auftrag auf das Trägermaterial. Das elastomere Material wird insbesondere zu Dichtzwecken verwendet.

Zum Antrieb der Förderschnecke werden in erster Linie pneumatische Motoren vorgeschlagen (US-A-5 005 731, FR-A-2 210 488, US-A-3 953 006). In den beiden letztgenannten Dokumenten wird alternativ auch auf die Möglichkeit hingewiesen, statt eines Pneumatikmotors einen Hydraulikmotor vorzusehen, ohne daß näher spezifiziert ist, welcher Art der Motor ist.

Der Erfindung liegt die Aufgabe zugrunde, eine Extruderschweißeinrichtung der eingangs genannten Art so auszubilden, daß das Extrudergerät ein geringeres Gewicht hat und weniger Raum einnimmt.

Diese Aufgabe wird erfindungsgemäß dadurch gelöst, daß der Motor als wenigstens ein hydrostatischer Hydraulikmotor ausgebildet ist. Solche Hydraulikmotoren haben ein wesentlich besseres Leistungsgewicht und Volumen-Leistungsverhältnis als Elektromotoren. Außerdem zeichnen sie sich durch ein drehzahlsteifes Verhalten weitgehend unabhängig vom geforderten Drehmoment aus.

Als Hydraulikmotoren kommen insbesondere Axialkolben-, Drehflügel- oder Drehkolbenmotoren in Frage. Zum Betrieb des Hydraulikmotors wird zwar ein Anschluß an eine Hydraulikdruckquelle benötigt. Diese kann jedoch von dem eigentlichen Extrudergerät getrennt sein, wobei die Verbindung zwischen Hydraulikdruckquelle und dem Hydraulikmotor über Hydraulikschläuche hergestellt werden kann. Als Hydraulikdruckquelle sind insbesondere elektrisch angetriebene Hydraulikpumpen geeignet.

Die erfindungsgemäße Ausbildung eignet sich für jede Art von Extruderschweißgerät, das einen Antrieb zum Ausstoßen des plastifizierten Kunststoffmaterials aufweist. Das gute Leistungsgewicht und Volumen-Leistungsverhältnis erleichtert die Handhabung des Extrudergeräts wesentlich. Es ist aus diesem Grund auch besser geeignet für den Einsatz in Halbautomaten oder Robotern.

In Ausbildung der Erfindung ist vorgesehen, daß an den Hydraulikmotor Hydraulikschläuche zu dessen Versorgung mit einem Hydrauliköl angeschlossen sind, wobei die Hydraulikschläuche zweckmäßigerweise zu einem Schlauchpaket zusammengefaßt sind. Zu dem Schlauchpaket kann auch ein Luftschlauch gehören, wenn das Extrudergerät eine Nahtvorwärmeinrichtung aufweist, in der über den Luftschlauch zugeführte Luft erhitzt und dem Nahtbereich zugeführt wird. Desweiteren besteht auch die Möglichkeit, in das Schlauchpaket einen Drahtzuführschlauch für die Zuführung des Kunststoffmaterials in Drahtform zu integrieren. Sofern das Extrudergerät eine Stromversorgung benötigt, beispielsweise für eine Luftheizeinrichtung und/oder für die Steuerung des Fluidmotors, kann das Schlauchpaket auch wenigstens eine elektrische Leitung beinhalten. Diesen Maßnahmen liegt das Konzept zugrunde, das Extrudergerät selbst so weit wie möglich von allen Einrichtungen zu befreien, die sein Gewicht oder Volumen vergrößern könnten.

In weiterer Ausgestaltung der Erfindung ist vorgesehen, daß an den extruderfernen Enden der Hydraulikschläuche ein Hydraulikdruckaggregat, z. B. eine Hydraulikpumpe angeschlossen ist, die beispielsweise in einem auf Rollen gelagerten Gehäuse angeordnet ist. Dies läßt es zu, daß die Extruderschweißeinrichtung an beliebigen Orten eingesetzt werden kann, sofern nur Energie für den Betrieb des Hydraulikdruckaggregats vorhanden ist. Das Hydraulikdruckaggregat hat zweckmäßigerweise eine Aufnahme für eine Drahtrolle aus dem Kunststoffmaterial und auch eine Luftversorgungseinrichtung, die über einen Luftschlauch mit dem Extrudergerät verbunden ist. Dies schließt nicht aus, daß die Luftversorgungseinrichtung und/oder die Aufnahme für die Drahtrolle am Extrudergerät selbst angeordnet sind. Dann muß allerdings der Nachteil in Kauf genommen werden muß, daß sich hierdurch Gewicht und Volumen des Extrudergeräts vergrößern.

In weiterer Ausgestaltung der Erfindung ist vorgesehen, daß eine Drehzahlsteuereinrichtung für die Einstellung der Drehzahl des Hydraulikmotors vorgesehen ist. Eine solche Drehzahlsteuereinrichtung ist gerade bei Hydraulikmotoren einfach einzurichten. Die Drehzahlsteuereinrichtung kann eine Bypassteuerung aufweisen, die am Hydraulikmotor und/oder an einem mit dem Hydraulikmotor verbundenen Hydraulikdruckaggregat angeordnet ist. Alternativ dazu kann die Drehzahlsteuereinrichtung auch eine Drehzahlsteuerung für eine mit dem Hydraulikmotor verbundenen Hydraulikdruckaggregat aufweisen. Dabei kann die Drehzahlsteuereinrichtung eine Drehzahleinstelleinrichtung am Extrudergerät aufweisen, die über eine Steuerleitung mit der Drehzahlsteuereinrichtung verbunden ist. Vorzugsweise sollte die Drehzahlsteuereinrichtung einen Regelkreis zur Konstanthaltung der eingestellten Drehzahl aufweisen.

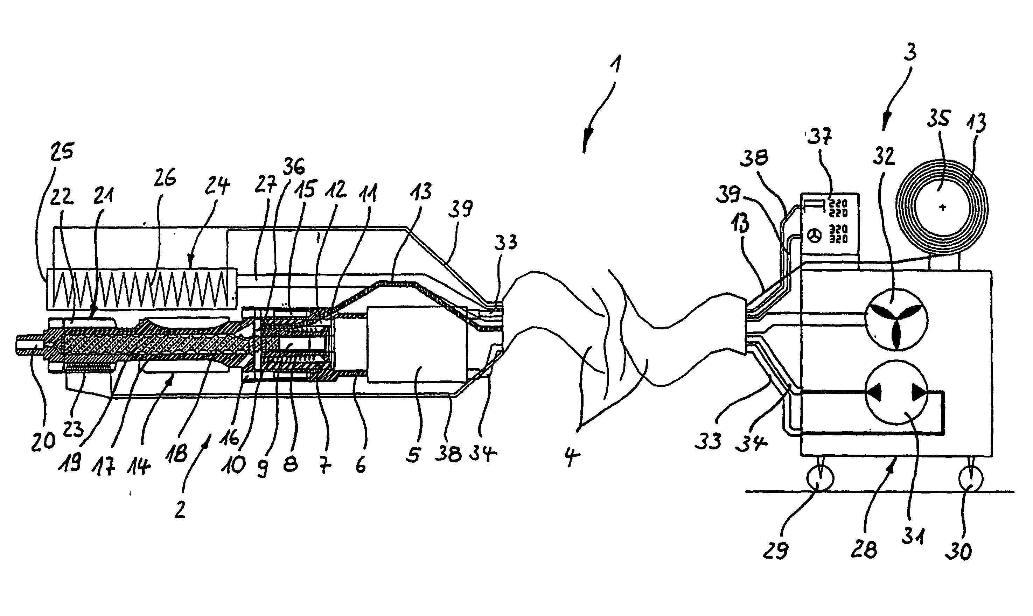

In der Zeichnung ist die Erfindung anhand eines Ausführungsbeispiels näher veranschaulicht. Sie zeigt eine insgesamt mit 1 bezeichnete Extruderschweißeinrichtung, die im wesentlichen aus zwei Teilen besteht, nämlich zum einen einem handhabbaren Extrudergerät 2 und zum anderen einer Versorgungseinrichtung 3, wobei Extrudergerät 2 und Versorgungseinrichtung 3 durch ein flexibles, hier nur verkürzt dargestelltes Schlauchpaket 4 verbunden sind.

Das Extrudergerät 2 weist einen Hydraulikmotor 5 auf, der beispielsweise als Axialkolben, Drehflügel- oder Drehkolbenmotor ausgebildet sein kann. Mit dem Gehäuse des Hydraulikmotors 5 fest verbunden ist eine Außenhülse 6, die über diesen in axialer Richtung vorsteht. In die Außenhülse 6 ist eine Innenhülse 7 eingesetzt, die mit der Außenhülse 6 fest verbunden ist. Sie umgibt eine Förderschraube 8, die auf der Antriebswelle 9 des Hydraulikmotors 5 sitzt und mit dieser drehfest verbunden ist. Außenseitig weist die Förderschraube 8 ein Fördergewinde 10 auf. Der von dem Fördergewinde 10 erzeugte Mantel ist kegelförmig mit sich in Richtung vom Hydraulikmotor 5 weg vergrößerndem Durchmesser.

Die Außenhülse 6 weist eine schräg auf die Förderschraube 8 gerichtete Einzugsbohrung 11 auf, die mit einem Einzugsschlitz 12 in der Innenhülse 7 so korrespondiert, daß von außen ein Kunststoffdraht 13 in den Raum zwischen Innenhülse 7 und Förderschraube 8 eingeführt werden kann, wobei der Kunststoffdraht außenseitig in einem halbkreisförmigen Förderkanal in der Innenhülse 7 geführt wird. Durch Verdrehung der Förderschraube 8 mit Hilfe des Hydraulikmotors 5 wird der Kunststoffdraht 13 mitgenommen und in Richtung vom Hydraulikmotor 5 weg bewegt.

An die Stirnseite der Außenhülse 6 ist eine Plastifiziereinrichtung 14 mittels Schrauben 15, 16 angeflanscht. Die Plastifiziereinrichtung 14 weist ein rohrförmiges Plastifiziergehäuse 17 auf, das von einem im Querschnitt kreisrunden Durchgangskanal 18 durchsetzt ist. In dem Durchgangskanal 18 ist eine Förderschnecke 19 angeordnet, die bis in die Förderschraube 8 hineinreicht und dort mit ihr drehfest verbunden ist. Der Durchgangskanal 18 mündet in einer Ausstoßöffnung 20, über die das Kunststoffmaterial austreten kann.

Zum freien Ende der Plastifiziereinrichtung 18 hin ist eine Heizeinrichtung 21 angeordnet, die das Plastifiziergehäuse 17 mit einer Hülse 22 umgibt, in der Heizwendeln 23 angeordnet sind. Ferner ist schematisch dargestellt eine Nahtvorwärmeinrichtung 24, die sich parallel zu dem Plastifiziergehäuse 17 erstreckt und einen Luftaustritt 25 nahe der Auslaßöffnung 20 des Durchgangskanals 18 hat. Die Nahtvorwärmeinrichtung 24 beinhaltet eine Heizwendel 26 und wird auf der dem Luftaustritt 25 abgewandten Seite über einen Luftzuführschlauch 27 mit Luft versorgt. Diese wird durch die Heizwendel 26 erhitzt und tritt über den Luftaustritt 25 aus, wobei sie auf den Nahtbereich der zu verschweißenden Werkstücke auftrifft und so für dessen Vorwärmung sorgt.

Die Versorgungseinrichtung 3 weist ein Versorgungsgehäuse 28 auf, das auf Rollen 29, 30 verfahrbar ist. Die Versorgungseinrichtung 3 ist gegenüber dem Extrudergerät 2 verkleinert dargestellt. Innerhalb des Versorgungsgehäuses 28 sind eine Hydraulikpumpe 31 und ein Gebläse 32 angeordnet. An die Hydraulikpumpe 31 sind zwei Hydraulikschläuche 33, 34 angeschlossen, die über das Schlauchpaket 4 zu dem Hydraulikmotor 5 geführt werden, so daß ein Hydraulikkreislauf entsteht. Über eine Drehzahlsteuereinrichtung entweder an der Hydraulikpumpe 31 oder am Hydraulikmotor 5 kann dessen Drehzahl entsprechend den jeweiligen Anforderungen angepaßt werden. Das Gebläse 32 ist mit dem Luftzuführschlauch 27 verbunden, der über das Schlauchpaket 4 zu der Nahtvorwärmeinrichtung 24 geht. Es versteht sich, daß die Nahtvorwärmeinrichtung 24 auch innerhalb der Versorgungseinrichtung 3 im Anschluß an das Gebläse 32 angeordnet sein kann, um das Extrudergerät 2 noch weiter zu entlasten.

Auf der Oberseite des Versorgungsgehäuses 28 ist eine frei drehbare Rolle 35 angeordnet, auf die ein Vorrat an Kunststoffdraht 13 aufgerollt ist. Der Kunststoffdraht 13 wird von der Rolle 35 abgezogen und verläuft in dem Schlauchpaket 4 innerhalb eines Führungsschlauchs bis zu dem Extrudergerät 2. Dort tritt er über die Einzugsbohrung 11 und den Einzugsschlitz 12 in das Innere des Extrudergeräts 2 ein, wobei der Abzug von der Förderschraube 8 bewirkt wird. Am Ende der Förderschraube 8 befindet sich ein umlaufendes Drehmesser 36, das mit der Förderschraube 8 drehfest verbunden ist und den Kunststoffdraht 13 in einzelne Drahtstücke aufteilt. Diese gelangen dann in den Durchgangskanal 18 der Plastifiziereinrichtung 14 und werden dort in Richtung der Auslaßöffnung 20 befördert. Aufgrund von Reibung und Kompression erhitzt sich das Kunststoffmaterial. Zusätzlich sorgt die Heizeinrichtung 21 für die Plastifizierung des Kunststoffmaterials, so daß aus der Auslaßöffnung 20 eine plastifizierte Kunststoffraupe austritt.

Auf der Oberseite des Versorgungsgehäuses 28 ist ferner eine Steuereinrichtung 37 zur elektrischen Versorgung der Heizeinrichtung 21 über ein Elektrokabel 38 und der Nahtvorwärmeinrichtung 24 über ein Elektrokabel 39. Beide Elektrokabel 38, 39 werden durch das Schlauchpaket 4 geführt. Über die Steuereinrichtung 37 können die Temperaturen der Heizeinrichtung 21 und der Nahtvorwärmeinrichtung 24 eingestellt werden. Regeleinrichtungen sorgen für eine Konstanthaltung der Temperaturen. Die Steuereinrichtung 27 kann auch sämtliche erforderlichen Bedienelemente enthalten, um die Hydraulikpumpe 31, das Gebläse 32 und die Stromversorgungen ein- und auszuschalten sowie einzustellen. Es versteht sich, daß diese Bedienelemente auch an dem Extrudergerät 2 vorgesehen sein kann, und zwar auch zusätzlich und damit parallel zu den an der Steuereinrichtung 37.

Die an der Versorgungseinrichtung 3 angeordneten Geräte und Einrichtungen können bis auf die Hydraulikpumpe 31 einzeln oder insgesamt auch an dem Extrudergerät 2 angeordnet sein, auch wenn hierdurch dessen Gewicht und Volumen vergrößert werden. Insgesamt sind dann das Leistungsgewicht und das Volumen-Leistungsverhältnis immer noch besser als bei den bekannten Extrudergeräten mit Elektromotor.

Die Hydraulikpumpe 31 muß nicht - wie dargestellt - in axialer Ausrichtung zu den übrigen Teilen des Extrudergeräts 2 angeordnet sein. Sie kann auch rechtwinklig nach unten gehend angeordnet sein, wobei die Übertragung der Drehbewegung über ein Kegelgetriebe bewirkt werden kann. Diese Anordnung hat den Vorteil, daß sich hierdurch ein Handgriff bildet ähnlich wie bei den bekannten Extrudergeräten.

## Patentansprüche

1. Extruderschweißeinrichtung (1) zur Verschweißung von Kunststoffwerkstücken mit einem Extrudergerät (2), das mit einer Heizeinrichtung (21) zur Plastifizierung von thermoplastischem Kunststoffmaterial (13) und mit einer Ausstoßeinrichtung für das plastifizierte Kunststoffmaterial ausgerüstet ist, wobei die Ausstoßeinrichtung ein auf das Kunststoffmaterial einwirkendes Ausstoßorgan (19) aufweist, das von einem Motor (5) angetrieben ist, **dadurch gekennzeichnet, daß** der Motor als wenigstens ein hydrostatischer Hydraulikmotor (5) ausgebildet ist.

2. Extruderschweißeinrichtung nach Anspruch 1, **dadurch gekennzeichnet, daß** an den Hydraulikmotor (5) Hydraulikschläuche (33, 34) zu dessen Versorgung mit einer Hydraulikflüssigkeit angeschlossen sind, die mit einem Hydraulikdruckaggregat (31) verbindbar sind.

3. Extruderschweißeinrichtung nach Anspruch 2, **dadurch gekennzeichnet, daß** die Hydraulikschläuche (33, 34) zu einem Schlauchpaket (4) zusammengefaßt sind.

4. Extruderschweißeinrichtung nach Anspruch 3, **dadurch gekennzeichnet, daß** zu dem Schlauchpaket (4) ein Luftschlauch (27) für die Zuführung von Luft für eine Nahtvorwärmung gehört.

5. Extruderschweißeinrichtung nach Anspruch 3 oder 4, **dadurch gekennzeichnet, daß** zu dem Schlauchpaket (4) ein Drahtzuführschlauch für die zuführung des Kunststoffmaterials in Drahtform (13) gehört.

6. Extruderschweißeinrichtung nach einem der Ansprüche 3 bis 5, **dadurch gekennzeichnet, daß** zu dem Schlauchpaket (4) wenigstens eine elektrische Leitung (38, 39) für die Stromversorgung einer Luftheizeinrichtung (24) und/oder für die Steuerung des Hydraulikmotors (5) gehören.

7. Extruderschweißeinrichtung nach einem der Ansprüche 2 bis 6, **dadurch gekennzeichnet, daß** das Hydraulikdruckaggregat (31) auf Rollen (29, 30) angeordnet ist.

8. Extruderschweißeinrichtung nach einem der Ansprüche 2 bis 7, **dadurch gekennzeichnet, daß** das Hydraulikdruckaggregat (31) eine Aufnahme (35) für eine Drahtrolle aus Kunststoffmaterial (13) aufweist.

9. Extruderschweißeinrichtung nach einem der Ansprüche 2 bis 8, **dadurch gekennzeichnet, daß** das Hydraulikdruckaggregat (31) eine Luftversorgungseinrichtung (32) aufweist, die über einen Luftschlauch (27) mit dem Extrudergerät (2) verbunden ist.

10. Extruderschweißeinrichtung nach einem der Ansprüche 1 bis 9, **dadurch gekennzeichnet, daß** eine Drehzahlsteuereinrichtung für die Einstellung der Drehzahl des Hydraulikmotors (5) vorgesehen ist.

11. Extruderschweißeinrichtung nach Anspruch 10, **dadurch gekennzeichnet, daß** die Drehzahlsteuereinrichtung eine Bypassteuerung aufweist, die am Hydraulikmotor (5) und/oder an eines mit dem Hydraulikmotor (5) verbundenen Hydraulikdruckaggregat (31) angeordnet ist.

12. Extruderschweißeinrichtung nach Anspruch 10, **dadurch gekennzeichnet, daß** die Drehzahlsteuereinrichtung eine Drehzahlsteuerung für ein mit dem Hydraulikmotor (5) verbundenen Hydraulikdruckaggregat (31) aufweist.

13. Extruderschweißeinrichtung nach Anspruch 11 oder 12, **dadurch gekennzeichnet, daß** die Drehzahlsteuereinrichtung eine Drehzahleinstelleinrichtung am Extrudergerät (2) aufweist, die über eine Steuerleitung mit der Drehzahlsteuereinrichtung verbunden ist.

14. Extruderschweißeinrichtung nach einem der Ansprüche 10 bis 13, **dadurch gekennzeichnet, daß** die Drehzahlsteuereinrichtung einen Regelkreis zur Konstanthaltung der eingestellten Drehzahl aufweist.

## Claims

1. An extruder welding device (1) for welding plastic workpieces, having an extruder unit (2) that is equipped with a heating device (21) for plasticating plastic material and with a discharge device for plasticated plastic material, wherein the discharge device comprises a discharge member (19) acting on the plastic material and driven by a motor (5), **characterized in that** the motor is configured as at least one hydrostatic hydraulic motor (5).

2. Extruder welding device as defined in Claim 1, **characterized in that** fluid hoses (33, 34), which can be connected to a pressurized hydraulic generator (31), are attached to the hydraulic motor (5) in order to supply it with a hydraulic liquid.

3. Extruder welding device as defined in Claim 2, **characterized in that** the fluid hoses (33, 34) are combined into a hose bundle (4).

4. Extruder welding device as defined in Claim 3, **characterized in that** the hose bundle (4) includes an air hose (27) for delivering air for a seam preheating.

5. Extruder welding device as defined in Claim 3 or 4, **characterized in that** the hose bundle (4) includes a wire delivery hose for delivering the plastic material in wire form (13).

6. Extruder welding device as defined in one of Claims 3 through 5, **characterized in that** the hose bundle (4) includes at least one electrical line (38, 39) for supplying electric power to an air heating device (24) and/or for the control of the hydraulic motor (5).

7. Extruder welding device as defined in one of Claims 2 through 6, **characterized in that** the pressurized hydraulic generator (31) is arranged on casters (29, 30).

8. Extruder welding device as defined in one of Claims 2 through 7, **characterized in that** the pressurized hydraulic generator (31) has a receptacle (35) for a reel of wire made of the plastic material (13).

9. Extruder welding device as defined in one of Claims 2 through 8, **characterized in that** the pressurized hydraulic generator (31) has an air supply device (32) that is connected via an air hose (27) to the extruder unit (2).

10. Extruder welding device as defined in one of Claims 1 through 9, **characterized in that** a rotation speed control device for adjusting the rotation speed of the fluid motor (5) is provided.

11. Extruder welding device as defined in Claim 10, **characterized in that** the rotation speed control device has a bypass controller that is arranged on the fluid motor (5) and/or on a pressurized fluid generator (31) connected to the fluid motor (5).

12. Extruder welding device as defined in Claim 10, **characterized in that** the rotation speed control device has a rotation speed controller for a pressurized fluid generator (31) connected to the fluid motor (5).

13. Extruder welding device as defined in Claim 11 or 12, **characterized in that** the rotation speed control device has a rotation speed adjustment device on the extruder unit (2) that is connected via a control line to the rotation speed control device.

14. Extruder welding device as defined in one of Claims 10 through 13, **characterized in that** the rotation speed control device has a control loop to stabilize the rotation speed that is set.

## Revendications

1. Appareil de soudage par extrusion (1) pour souder des pièces en matière plastique avec une extrudeuse (2), qui est équipée avec un dispositif de chauffage (21) pour plastifier des matières thermoplastiques (13) et avec un dispositif d'expulsion pour la matière en plastique plastifié; le dispositif d'expulsion présentant un organe d'expulsion (19) agissant sur le matériau en plastique qui est entraîné par un moteur (5), **caractérisé en ce que** le moteur est formé au moins en tant que moteur hydraulique (5) hydrostatique.

2. Appareil de soudage par extrusion selon la revendication 1, **caractérisé en ce que** des tuyaux hydrauliques (33, 34) sont raccordés au moteur hydraulique (5) pour alimenter ledit moteur avec un liquide hydraulique, lesquels tuyaux sont susceptibles d'être reliés avec un agrégat de pression hydraulique (31).

3. Appareil de soudage par extrusion selon la revendication 2, **caractérisé en ce que** les tuyaux hydrauliques (33, 34) sont regroupés, en un paquet de tuyaux (4).

4. Appareil de soudage par extrusion selon la revendication 3, **caractérisé en ce qu'**un tuyau d'air (27) destiné à l'alimentation d'air appartient au paquet de tuyaux (4) pour un préchauffage de joint.

5. Appareil de soudage par extrusion selon la revendication 3 ou 4, **caractérisé en ce qu'**un tuyau d'alimentation de fil appartient au paquet de tuyaux pour l'alimentation du matériau en plastique sous la forme de fil (13).

6. Appareil de soudage par extrusion selon une des revendications 3 à 5, **caractérisé en ce qu'**au moins une conduite électrique (38, 39) appartient au paquet de tuyaux (4) pour l'alimentation en courant d'un dispositif de chauffage (24) et/ou la commande du moteur hydraulique (5).

7. Appareil de soudage par extrusion selon une des revendications 2 à 6, **caractérisé en ce que** le groupe de pression hydraulique (31) est disposé sur roulettes (29, 30).

8. Appareil de soudage par extrusion selon une des revendications 2 à 7, **caractérisé en ce que** l'agrégat de pression hydraulique (31) présente une réception (35) pour un rouleau de fil en matière plastique (13).

9. Appareil de soudage par extrusion selon une des revendications 2 à 8, **caractérisé en ce que** l'agrégat de pression hydraulique (31) présente un dispositif d'alimentation d'air (32) qui est relié à l'extrudeuse (2) par un tuyau d'air (27).

10. Appareil de soudage par extrusion selon une des revendications 1 à 9, **caractérisé en ce qu'**un dispositif de commande de la vitesse de rotation est prévu pour le réglage de la vitesse de rotation du moteur hydraulique (5).

11. Appareil de soudage par extrusion selon la revendication 10, **caractérisé en ce que** le dispositif de commande de la vitesse de rotation présente une commande by-pass qui est disposée sur un moteur hydraulique (5) et/ou sur un agrégat de pression hydraulique relié au moteur hydraulique (5).

12. Appareil de soudage par extrusion selon la revendication 16, **caractérisé en ce que** le dispositif de commande de la vitesse de rotation présente une commande de la vitesse de rotation pour un agrégat de pression hydraulique (31) relié au moteur hydraulique (5).

13. Appareil de soudage par extrusion selon la revendication 11 ou 12, **caractérisé en ce que** le dispositif de commande de la vitesse de rotation présente un dispositif de réglage de la vitesse de rotation sur l'extrudeuse (2) qui est relié avec le dispositif de commande de la vitesse de rotation par un conducteur de commande .

14. Appareil de soudage par extrusion selon une des revendications 10 à 13, **caractérisé en ce que** le dispositif de commande de la vitesse de rotation présente un circuit de réglage pour maintenir de façon constante la vitesse de rotation préréglée.
